# EUROPÄISCHE PATENTANMELDUNG

(11) **EP 4 746 586 A1**
(43) Veröffentlichungstag der Anmeldung: **20.05.2026**
(21) Anmeldenummer: 24213181.1
(22) Anmeldetag: 15.11.2024
(51) Int. Cl.: H05B 47/19

(54) **GEOREFERENZIERTE ZUGRIFFSBERECHTIGUNG ZUR PARAMETRIERUNG VON LEUCHTEN**

(71) Anmelder: Siteco GmbH, 83301 Traunreut (DE)
(72) Erfinder: SEICHE, Simon, 83278 Traunstein (DE)
(74) Vertreter: Schmidt, Steffen

(57) **Zusammenfassung**

Die Erfindung betrifft ein Verfahren zum Parametrieren einer Leuchte, welches folgende Schritte umfasst: Festlegen einer geographischen Fläche in einem Programm eines Servers, wobei die geographische Fläche einen beabsichtigten Installationsort der Leuchte umfasst; Installieren eines von dem Serverprogramm authentisierten Anwenderprogramms auf einem Mobilgerät, wobei das Anwenderprogramm dafür eingerichtet ist, mittels einer Schnittstelle des Mobilgeräts auf die Leuchte innerhalb der festgelegten geographischen Fläche zum Parametrieren der Leuchte elektronisch zuzugreifen; an dem Installationsort der Leuchte, Feststellen, ob sich das Mobilgerät innerhalb der festgelegten geographischen Fläche befindet, falls sich das Mobilgerät innerhalb der festgelegten geographischen Fläche befindet, Freigeben des elektronischen Zugriffs auf die Leuchte über die Schnittstelle des Mobilgeräts zum Parametrieren der Leuchte; und falls sich das Mobilgerät nicht innerhalb der festgelegten geographischen Fläche befindet, Sperren des elektronischen Zugriffs auf die Leuchte mittels der Schnittstelle des Mobilgerätes. Ferner umfasst die Erfindung ein Computerprogrammprodukt und ein System eingerichtet zur Durchführung des Verfahrens.

## Beschreibung

### TECHNISCHER BEREICH

Die vorliegende Offenbarung bezieht sich auf ein Verfahren zur Parametrierung von Leuchten. Insbesondere bezieht sich die vorliegende Offenbarung auf ein System und ein Verfahren zur geographisch basierten Authentifizierung und Steuerung des Zugriffs auf Leuchten mittels eines Mobilgeräts, um die Parametrierung der Leuchten nur innerhalb einer festgelegten geographischen Fläche zu ermöglichen.

### HINTERGRUND

Auf dem Gebiet der Beleuchtungssysteme ist es üblich, dass Leuchten vor ihrer Installation parametriert werden müssen, um ihre Funktionalität und Effizienz zu optimieren. Die einzustellenden Parameter umfassen z.B. die Helligkeit, die Lichtfarbe, die Lichtverteilung, soweit einstellbar, und bei zeitgesteuerten Leuchten die Ein- und Ausschaltzeiten.

Bekannte Systeme umfassen typischerweise die Verwendung von QR-Codes, die auf den Leuchten angebracht werden, um den Zugriff auf die Parametrierungsfunktionen zu ermöglichen. Diese QR-Codes dienen als Authentifizierungsmechanismus, der sicherstellt, dass nur berechtigte Personen oder Geräte Änderungen an den Leuchtenparametern vornehmen können. Das Verfahren erfordert, dass der Benutzer den QR-Code mit einem Mobilgerät scannt, um Zugang zu den Parametrierungsfunktionen zu erhalten.

Gemäß bekannter Verfahren zur Authentifizierung und Parametrierung von Leuchten entstehen jedoch mehrere Herausforderungen. Das Anbringen der Aufkleber mit eindeutigem QR-Code auf die Leuchte erfordert zusätzlichen Aufwand bei der Produktion der Leuchte. Dies bedeutet, dass während des Herstellungsprozesses jeder Leuchte ein individueller QR-Code zugewiesen und physisch auf der Leuchte angebracht werden muss. Dieser zusätzliche Schritt erhöht nicht nur die Produktionskosten, sondern auch die Komplexität des Herstellungsprozesses. Darüber hinaus muss der QR-Code während der gesamten Lebensdauer der Leuchte lesbar und intakt bleiben, was durch Umwelteinflüsse oder mechanische Beschädigungen beeinträchtigt werden kann.

Ein weiteres Problem besteht darin, dass die Zuordnung der mit dem QR-Code ausgelieferten Leuchten an den Kunden, welcher zum Parametrieren der Leuchte berechtigt werden soll, zusätzliche administrative Aufgaben erfordert. Der Hersteller muss sicherstellen, dass die QR-Codes korrekt verwaltet und den richtigen Kunden zugeordnet werden. Dies kann insbesondere bei großen Installationen oder bei der Lieferung von Leuchten an verschiedene Standorte zeitaufwändig und fehleranfällig sein.

Es ist daher ein der vorliegenden Erfindung zugrunde liegendes technisches Problem, ein Verfahren zur Parametrierung von Leuchten bereitzustellen, das den Aufwand für die Authentifizierung der zur Parametrierung zugelassenen Personen bzw. Geräte vereinfacht.

### ZUSAMMENFASSUNG

Zur Lösung der genannten Probleme stellt die Erfindung ein Verfahren nach Anspruch 1 sowie ein Computerprogrammprodukt nach Anspruch 11 und ein System aus wenigstens einem Mobilgerät und einem Server nach Anspruch 12 bereit.

Gemäß einer Besonderheit der Erfindung umfasst das Verfahren zum Parametrieren einer Leuchte mehrere Schritte. Zunächst wird eine geographische Fläche in einem Programm eines Servers festgelegt, wobei diese Fläche den beabsichtigten Installationsort der Leuchte umfasst. Dieser Schritt wird vorzugsweise bereites beim Hersteller der Leuchte für eine Kunden der Leuchte oder vom Kunden selbst vorgenommen. Ein von dem Serverprogramm authentisiertes Anwenderprogramm wird auf einem Mobilgerät installiert, das dafür eingerichtet ist, mittels einer Schnittstelle des Mobilgeräts auf die Leuchte innerhalb der festgelegten geographischen Fläche elektronisch zuzugreifen, um die Leuchte zu parametrieren. Das Serviceprogramm kann z.B. in einer Cloud gespeichert sein. Das Installieren des Anwendungsprogramms auf dem Mobilgerät kann bereits der Kunde, der über das Serverprogramm dazu berechtigt ist, selbst vornehmen. Am Installationsort der Leuchte wird festgestellt, ob sich das Mobilgerät innerhalb der festgelegten geographischen Fläche befindet. Falls das Mobilgerät sich innerhalb dieser Fläche befindet, wird der elektronische Zugriff auf die Leuchte über die Schnittstelle des Mobilgeräts freigegeben, um die Parametrierung der Leuchte vorzunehmen. Falls sich das Mobilgerät nicht innerhalb der festgelegten geographischen Fläche befindet, wird der elektronische Zugriff auf die Leuchte mittels der Schnittstelle des Mobilgeräts gesperrt.

Demnach kann in dem Serverprogramm einem Eigner (d.h. Kunden) der Leuchte die Hoheit über geographische Flächen zugewiesen werden und der Eigner kann seine Mitarbeiter durch Bereitstellen eines Anmeldecodes, der die Nutzung des Anwendungsprogramms auf deren Mobilgeräten ermöglicht, autorisieren, die Parametrierung der Leuchte am Installationsort vorzunehmen. Ein Vorteil des Verfahrens ist eine Aufwands- und Kostenreduktion, da die zeitlich vorgelagerte "Inventarisierung" durch Dritte entfällt. Ein weiterer Vorteil besteht darin, dass eine Parametrierung im Vorfeld durch Dritte oder an anderen Orten möglich ist, ohne die Leuchte fix einem Kunden fix zuweisen und danach ggf. wieder ändern zu müssen. Zudem sind die für die initiale Registrierung der ausgelieferten Leuchten notwendigen QR-Codes nicht mehr zwingend erforderlich. Durch die georeferenzierte Zugriffsberechtigung wird die Parametrierung effizienter und sicherer gestaltet, da die Leuchte nur von autorisierten Benutzern der Mobilgeräte innerhalb der festgelegten geographischen Fläche parametriert werden kann. Dies stellt sicher, dass nur befugte Personen mit den entsprechenden Rechten die Leuchte konfigurieren können, was die Sicherheit und Integrität des Systems gewährleistet ohne die Notwendigkeit für QR-Codes oder andere physische Identifikationsmittel.

Nach einer Ausführungsform umfasst das Verfahren zur Parametrierung einer Leuchte spezifische Kommunikationsmechanismen zwischen dem Mobilgerät und der Leuchte am Installationsort. Das Mobilgerät empfängt mittels einer Schnittstelle eine Kennung der Leuchte, was den Prozess der Feststellung, ob sich das Mobilgerät innerhalb der festgelegten geographischen Fläche befindet, initiiert. Diese Kennung dient als Identifikationsmerkmal der Leuchte und ermöglicht eine gezielte Kommunikation zwischen dem Mobilgerät und der Leuchte. Durch den Empfang der Kennung wird sichergestellt, dass das Mobilgerät die spezifische Leuchte am Installationsort erkennt und eine eindeutige Verbindung hergestellt wird. Dies ist besonders vorteilhaft, da es die Sicherheit und Genauigkeit der Parametrierung erhöht, indem nur autorisierte Mobilgeräte, die sich innerhalb der festgelegten geographischen Fläche befinden, Zugriff auf die Leuchte erhalten. Der Prozess beginnt erst nach dem Empfang der Kennung, was bedeutet, dass die Authentifizierung und Lokalisierung des Mobilgeräts am Ort der Leuchte zuverlässig durchgeführt werden können. Diese Methode reduziert die Notwendigkeit einer zeitlich vorgelagerten Zuordnung der Leuchten zu bestimmten Kunden oder Kundengruppen, was den Aufwand und die Kosten für die Installation und Parametrierung erheblich verringert. Zudem wird die Möglichkeit von Fehlern und Fehlzuweisungen minimiert, da die Leuchte direkt am Installationsort identifiziert und parametriert wird.

Nach einer Ausführungsform zeigt das Mobilgerät die Kennung der Leuchte auf einer grafischen Benutzeroberfläche an, wenn festgestellt wurde, dass sich das Mobilgerät innerhalb der festgelegten geographischen Fläche befindet, und zeigt die Kennung nicht an, wenn festgestellt wurde, dass sich das Mobilgerät nicht innerhalb der festgelegten geographischen Fläche befindet. Dies bedeutet, dass das Mobilgerät in der Lage ist, eine visuelle Rückmeldung zu geben, die dem Benutzer anzeigt, ob er sich in einem autorisierten Bereich befindet, um die Leuchte zu parametrieren. Die grafische Benutzeroberfläche des Mobilgeräts dient als Kommunikationsmittel zwischen dem Benutzer und der Leuchte, indem sie die Kennung der Leuchte anzeigt, wenn der Benutzer sich im richtigen geographischen Bereich befindet. Diese Kennung kann eine eindeutige Identifikation der Leuchte sein, die es dem Benutzer ermöglicht, sicherzustellen, dass er die richtige Leuchte parametriert. Der Vorteil dieser Funktion besteht darin, dass sie die Benutzerfreundlichkeit und die Sicherheit des Parametrierungsvorgangs erhöht. Durch die Anzeige der Kennung auf der grafischen Benutzeroberfläche wird dem Benutzer eine zusätzliche Bestätigung gegeben, dass er sich im autorisierten Bereich befindet und die richtige Leuchte ausgewählt hat. Dies reduziert das Risiko von Fehlern bei der Parametrierung und stellt sicher, dass nur autorisierte Benutzer Zugriff auf die Leuchte haben. Darüber hinaus wird durch die Nichtanzeige der Kennung, wenn sich das Mobilgerät außerhalb der festgelegten geographischen Fläche befindet, ein zusätzlicher Schutzmechanismus implementiert, der unbefugten Zugriff verhindert. Dies trägt zur Gesamtsicherheit des Systems bei, indem es sicherstellt, dass nur Benutzer, die sich physisch im autorisierten Bereich befinden, die Leuchte parametrieren können. Diese Funktionalität ist besonders nützlich in städtischen Umgebungen, in denen viele Leuchten dicht beieinander installiert sind und eine klare Identifikation und Autorisierung erforderlich ist, um sicherzustellen, dass jede Leuchte korrekt und sicher parametriert wird. Alternativ kann in einer Ausführungsform vorgesehen sein, dass auch dann, wenn festgestellt wurde, dass sich das Mobilgerät nicht innerhalb der festgelegten geographischen Fläche befindet, die Kennung trotzdem angezeigt wird, aber lediglich der Zugriff auf die Leuchte verweigert wird.

Nach einer Ausführungsform ist das Mobilgerät so eingerichtet, dass es den geographischen Ort des Mobilgeräts mittels eines satellitengestützten Systems, insbesondere eines GPS-Empfängers, ermittelt. Dies ermöglicht eine präzise Bestimmung des Standorts des Mobilgeräts. Durch die Verwendung eines GPS-Empfängers kann das Mobilgerät sicherstellen, dass es sich tatsächlich innerhalb der festgelegten geographischen Fläche befindet, bevor es den Zugriff auf die Leuchte freigibt. Dies reduziert das Risiko unbefugter Zugriffe und erleichtert die Verwaltung und Kontrolle der Leuchten, da keine manuelle Eingabe von Passwörtern oder die Verwendung von QR-Codes erforderlich ist. Ein Vorteil dieser Lösung ist die Reduktion von Fehlern und Kosten, da die zeitaufwändige und fehleranfällige Zuordnung der Leuchten zu Kunden entfällt.

Nach einer Ausführungsform ist das Mobilgerät ein Smartphone. Dies bedeutet, dass die Parametrierung der Leuchte durch ein weit verbreitetes und leicht zugängliches Gerät erfolgt, was die Benutzerfreundlichkeit und die Verfügbarkeit des Verfahrens erhöht. Smartphones verfügen über in der Regel ohnehin über Kommunikationsschnittstellen wie WLAN, Bluetooth und mobile Datenverbindungen, die eine nahtlose und sichere Verbindung zur Leuchte ermöglichen. Durch die Verwendung eines Smartphones wird die Notwendigkeit spezieller Hardware eliminiert, was die Kosten und den Aufwand für die Implementierung des Verfahrens reduziert. Zudem sind Smartphones mit GPS ausgestattet, was die genaue Bestimmung der geographischen Fläche und die Authentifizierung des Standorts des Mobilgeräts erleichtert. Ein weiterer Vorteil ist die Möglichkeit, die Parametrierungs-App einfach über App-Stores zu verteilen und regelmäßig zu aktualisieren, soweit das betreffende Smartphon vom Eigner der Leuchte über das Serverprogramm zur Durchführung der Leuchten-Parametrierung in dem ihm zugewiesenen geographischen Gebiet zertifiziert ist.

Nach einer Ausführungsform umfasst das Verfahren zur Parametrierung einer Leuchte die Verwendung einer drahtlosen Schnittstelle des Mobilgeräts, wobei diese Schnittstelle insbesondere durch eine NFC/RFID-Schnittstelle, eine Bluetooth-Schnittstelle oder eine WLAN-Schnittstelle gebildet ist. Diese spezifischen Kommunikationsmechanismen ermöglichen eine flexible und effiziente Interaktion zwischen dem Mobilgerät und der Leuchte. RFID (Radio Frequency Identification) bzw. NFC (Near Field Communication), welches eine spezielle Untergruppe von RFID bildet, bieten den Vorteil einer sehr kurzen Reichweite, was die Sicherheit erhöht, da die Parametrierung nur in unmittelbarer Nähe der Leuchte erfolgen kann. Dies minimiert das Risiko eines unbefugten Zugriffs. Bluetooth hingegen bietet eine etwas größere Reichweite und ist weit verbreitet in Mobilgeräten, was die Implementierung und Nutzung erleichtert. Es ermöglicht eine stabile und zuverlässige Verbindung zur Leuchte, selbst wenn sich das Mobilgerät nicht direkt neben der Leuchte befindet. WLAN bietet die größte Reichweite unter den genannten Schnittstellen und ermöglicht die Parametrierung der Leuchte auch aus größerer Entfernung innerhalb des festgelegten geographischen Bereichs. Dies kann besonders nützlich sein, wenn mehrere Leuchten in einem größeren Gebiet parametriert werden müssen, ohne dass der Benutzer sich zu jeder einzelnen Leuchte begeben muss. Die drahtlose Schnittstelle des Mobilgeräts ermöglicht eine nahtlose und benutzerfreundliche Parametrierung der Leuchte, indem sie den direkten physischen Kontakt und die Notwendigkeit von Kabelverbindungen eliminiert. Dies führt zu einer erheblichen Vereinfachung des Installations- und Parametrierungsprozesses.

Nach einer Ausführungsform umfasst der Schritt des Festlegens einer geographischen Fläche für einen beabsichtigten Installationsort der Leuchte, dass eine geographische Fläche für eine Vielzahl von Leuchten, deren Installation innerhalb der geographischen Fläche beabsichtigt ist, festgelegt wird. Dies bedeutet, dass nicht nur einzelne Leuchten, sondern eine Gruppe von Leuchten, die in einem bestimmten geographischen Bereich installiert werden sollen, gemeinsam definiert und verwaltet werden können. Dies erleichtert die Installation und Wartung von Leuchten in großen Projekten, wie beispielsweise in städtischen Gebieten oder auf großen Firmengeländen, erheblich.

Nach einer Ausführungsform umfasst die geographische Fläche, in der das Mobilgerät für die Parametrierung der Leuchte zugelassen ist, spezifische Bereiche wie eine Liegenschaft, einen Stadtteil oder die Fläche einer Kommune. Dies bedeutet, dass die geografische Begrenzung nicht nur auf einen kleinen Bereich beschränkt ist, sondern auch größere und spezifisch definierte Gebiete umfassen kann. Diese Erweiterung der geografischen Fläche bringt mehrere Vorteile mit sich. Erstens ermöglicht sie eine flexiblere und umfassendere Verwaltung von Leuchten in größeren geografischen Bereichen, was besonders für städtische oder kommunale Anwendungen nützlich ist. Zweitens reduziert sie den administrativen Aufwand, da die Notwendigkeit entfällt, jede Leuchte individuell zu authentifizieren und zuzuordnen. Stattdessen kann eine einmal festgelegte geografische Fläche mehrere Leuchten umfassen, die dann alle durch autorisierte Mobilgeräte innerhalb dieser Fläche parametriert werden können. Dies führt zu einer effizienteren und kostengünstigeren Verwaltung und Wartung der Leuchten, da die Parametrierung zentral und gebietsbezogen gesteuert werden kann. Die Möglichkeit, größere geografische Flächen wie Stadtteile oder Kommunen zu definieren, bietet zudem eine bessere Anpassung an die spezifischen Bedürfnisse und Strukturen der jeweiligen Verwaltungseinheiten, was die Implementierung und den Betrieb der Leuchtenmanagementsysteme weiter vereinfacht und optimiert.

Ein spezifisches Merkmal einer Ausführungsform ist, dass die geographische Fläche entweder eine zusammenhängende Fläche oder mehrere getrennte Teilflächen umfassen kann. Diese Flexibilität in der Definition der geographischen Fläche ermöglicht eine präzisere und anpassungsfähigere Parametrierung der Leuchten. Beispielsweise kann eine zusammenhängende Fläche eine gesamte Stadt oder ein großes Areal umfassen, während getrennte Teilflächen spezifische, nicht zusammenhängende Bereiche wie verschiedene Stadtteile oder separate Grundstücke abdecken können. Diese Möglichkeit, mehrere getrennte Teilflächen zu definieren, bietet den Vorteil, dass die Parametrierung der Leuchten nicht auf eine einzige, kontinuierliche Fläche beschränkt ist. Dies ist besonders nützlich in Szenarien, in denen Leuchten an verschiedenen, nicht zusammenhängenden Orten installiert werden müssen, wie etwa in verschiedenen Stadtteilen oder auf unterschiedlichen Grundstücken eines Unternehmens. Durch die Berücksichtigung mehrerer Teilflächen kann die Parametrierung effizienter und zielgerichteter erfolgen, da der Zugriff auf die Leuchten nur in den relevanten Bereichen freigegeben wird Die Möglichkeit, mehrere getrennte Teilflächen zu definieren, trägt somit zu einer effizienteren und sichereren Verwaltung und Parametrierung der Leuchten bei, was insbesondere in komplexen Installationsszenarien von großem Vorteil ist.

Nach einer Ausführungsform erfolgt das Festlegen der geographischen Fläche im Serverprogramm durch das Festlegen eines Kreises um einen Mittelpunkt oder durch das Festlegen von Eckpunkten eines Polygons. Diese spezifischen Kommunikationsmechanismen ermöglichen eine flexible und präzise Definition des beabsichtigten Installationsortes der Leuchte. Der Kreis um einen Mittelpunkt erlaubt eine einfache und schnelle Festlegung eines Bereichs, was besonders nützlich ist, wenn der Installationsort eine zentrale Position hat und gleichmäßig verteilt werden soll. Das Festlegen von Eckpunkten eines Polygons bietet hingegen eine detailliertere und anpassungsfähigere Möglichkeit, unregelmäßige oder spezifische geographische Flächen genau zu definieren. Dies ist besonders vorteilhaft in städtischen Umgebungen oder komplexen Geländeformen, wo eine präzise Abgrenzung notwendig ist.

Nach einer Ausführungsform umfasst die Erfindung ein Computerprogrammprodukt mit Programmanweisungen, die, wenn sie auf einem Server und auf wenigstens einem Mobilgerät ausgeführt werden, dafür eingerichtet sind, das Verfahren zur Parametrierung einer Leuchte nach einer der vorhergehenden Ausführungsformen auszuführen. Das Computerprogrammprodukt ermöglicht die Implementierung des Verfahrens, indem es die notwendigen Schritte zur Festlegung einer geographischen Fläche, die Installation eines authentisierten Anwenderprogramms auf einem Mobilgerät und die Überprüfung der Position des Mobilgeräts innerhalb dieser Fläche automatisiert.

Nach einer Ausführungsform beschreibt die Erfindung ein System, das mindestens einem Mobilgerät und einem Server umfasst und zur Durchführung des beschriebenen Verfahrens eingerichtet ist. Dieses System ermöglicht die drahtlose Parametrierung von Leuchten durch die Nutzung georeferenzierter Zugriffsberechtigungen.

### BESCHREIBUNG EINER AUSFÜHRUNGSFORM

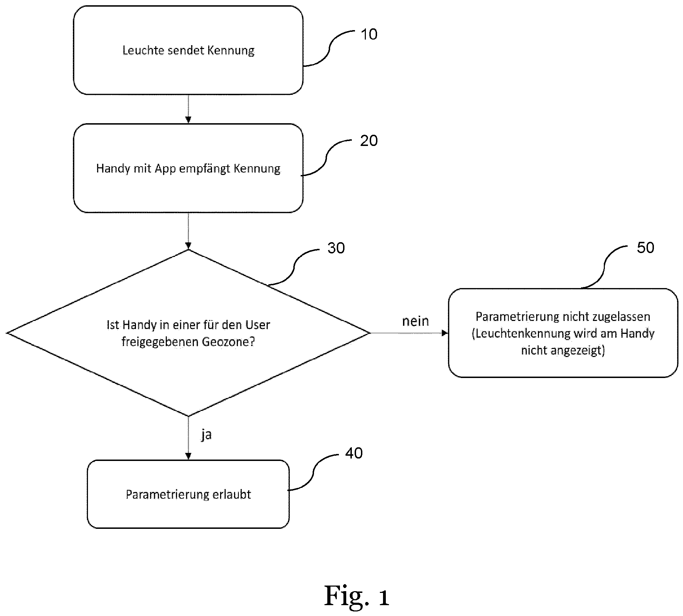

Weitere Merkmale und Vorteile der Erfindung werden aus der nachfolgenden Beschreibung einer Ausführungsformen deutlich, welche in Verbindung mit der Figur gegeben wird. Dabei zeigt
- Figur 1: ein schematisches Flussdiagramm eines Verfahrens zur Parametrierung einer Leuchte basierend auf der geographischen Position eines Mobilgeräts.

Die Ausführungsform der Erfindung betrifft ein Verfahren zur Parametrierung von Leuchten, insbesondere Straßenleuchten, mittels eines Mobilgeräts. Das Verfahren zielt darauf ab, die Verwaltung der Zugriffsberechtigungen für die Parametrierung von Leuchten zu vereinfachen, indem es den elektronischen Zugriff auf Leuchten mittels eines Mobilgeräts auf bestimmte geographische Flächen beschränkt. Dies wird erreicht, indem die Leuchten einer geographischen Fläche zugeordnet werden, die von einem Serverprogramm verwaltet wird. Ein authentisiertes Anwenderprogramm auf einem Mobilgerät ermöglicht den Zugriff auf die Leuchten innerhalb dieser geographischen Fläche, sofern sich das Mobilgerät ebenfalls innerhalb dieser Fläche befindet.

Die Ausgestaltungen der Erfindung umfassen ein Festlegen einer geographischen Fläche, die den Installationsort der Leuchte umfasst, zentral in einem Serverprogramm und die Installation eines authentisierten Anwenderprogramms auf einem Mobilgerät, das über eine Schnittstelle auf die Leuchte zugreifen kann, die Überprüfung, ob sich das Mobilgerät innerhalb der festgelegten geographischen Fläche befindet und das Freigabe des Zugriffs auf die Leuchte, nur wenn sich das Mobilgerät innerhalb der geographischen Fläche befindet. Anderenfalls ist der elektronische Zugriff gesperrt.

Figur 1 veranschaulicht den Ablauf des Verfahrens zur Parametrierung der Leuchten am Ort der installierten Leuchte, d.h. nachdem die eine oder vorzugsweise mehrere Leuchten an einen Kunden ausgeliefert wurden und dem Kunden eine geographische Fläche zentral, vorzugsweise vom Distributor der Leuchten, zugewiesen wurde. Die geographische Fläche umfasst den geplanten Installationsort der Leuchte und wird von dem Distributor der Leuchte exklusiv diesem Kunden zugewiesen. Der Kunde kann z.B. die Verwaltungsbehörde einer Kommune sein, der die geographische Fläche der Kommune exklusiv zugeordnet wird.

Die Abbildung zeigt ein Flussdiagramm, das die Schritte des Verfahrens einer erfindungsgemäßen Ausführungsform am Installationsort der Leuchte darstellt: Im Schritt 10 sendet die Leuchte eine Kennung aus, vorzugsweise über eine drahtlose Schnittstelle der Leuchte. Im Schritt 20 empfängt ein Mobilgerät, z.B. ein Smartphon, mit einem darauf installierten Anwenderprogramm, z.B. einer App, die Kennung. Im Schritt 30 wird überprüft, ob sich das Mobilgerät innerhalb der für den Benutzer (Kunde bzw. Eigner der Leuchte) freigegebenen geographischen Fläche befindet. Dies kann in dem Mobilgerät z.B. aufgrund der von einem GPS-Empfänger des Mobilgeräts bereitgestellten Daten in dem Anwendungsprogramm des Mobilgerät erfolgen. Wenn das Mobilgerät sich innerhalb der freigegebenen Zone befindet, wird die Parametrierung der Leuchte im Schritt 40 erlaubt. Optional kann eine Kennung das Leuchte auf dem Mobilgerät angezeigt werden. Ferner kann die Parametrierung der Leuchte vorzugsweise mittels einer graphischen Benutzerschnittstelle auf dem Mobilgerät erfolgen. Die elektronische Kommunikation zwischen dem Mobilgerät und der Leuchte erfolgt lokal drahtlos, z.B. über eine Bluetooth-Verbindung, eine WLAN-Verbindung oder NFC/RFID.

Wenn das Mobilgerät sich jedoch nicht innerhalb der freigegebenen geographischen Fläche befindet, wird die Parametrierung nicht zugelassen und die Kennung der Leuchte wird nicht auf dem Mobilgerät angezeigt (vgl. Schritt 50).

Dieses Verfahren ermöglicht eine sichere und effiziente Parametrierung von Leuchten, indem es den Zugang auf autorisierte Benutzer innerhalb spezifischer geographischer Flächen beschränkt. Dies reduziert den Aufwand und die Kosten, die durch eine zeitlich vorgelagerte Zuordnung der Leuchten zu dem Mobilgerät entstehen würde, um die Zugriffsberechtigung zur Parametrierung der Leuchten zu verwalten.

## Patentansprüche

1. Verfahren zum Parametrieren einer Leuchte, welches folgende Schritte umfasst:
Festlegen einer geographischen Fläche in einem Programm eines Servers, wobei die geographische Fläche einen beabsichtigten Installationsort der Leuchte umfasst;
Installieren eines von dem Serverprogramm authentisierten Anwenderprogramms auf einem Mobilgerät, wobei das Anwenderprogramm dafür eingerichtet ist, mittels einer Schnittstelle des Mobilgeräts auf die Leuchte innerhalb der festgelegten geographischen Fläche zum Parametrieren der Leuchte elektronisch zuzugreifen;
an dem Installationsort der Leuchte, Feststellen, ob sich das Mobilgerät innerhalb der festgelegten geographischen Fläche befindet,
falls sich das Mobilgerät innerhalb der festgelegten geographischen Fläche befindet, Freigeben des elektronischen Zugriffs auf die Leuchte über die Schnittstelle des Mobilgeräts zum Parametrieren der Leuchte; und
falls sich das Mobilgerät nicht innerhalb der festgelegten geographischen Fläche befindet, Sperren des elektronischen Zugriffs auf die Leuchte mittels der Schnittstelle des Mobilgerätes.

2. Verfahren nach Anspruch 1, wobei das Mobilgerät mittels der Schnittstelle eine Kennung der Leuchte am Installationsort der Leuchte empfängt und der Schritt des Feststellens, ob sich das Mobilgerät innerhalb der festgelegten geographischen Fläche befindet, gestartet wird, nachdem das Mobilgerät die Kennung der Leuchte empfangen hat.

3. Verfahren nach Anspruch 2, wobei das Mobilgerät die Kennung der Leuchte auf einer graphischen Benutzeroberfläche anzeigt, wenn festgestellt wurde, dass sich das Mobilgerät innerhalb der festgelegten geographischen Fläche befindet, und wenn festgestellt wurde, dass sich das Mobilgerät nicht innerhalb der festgelegten geographischen Fläche befindet, die Kennung nicht anzeigt oder anzeigt, aber einen Zugriff auf die Leuchte verweigert.

4. Verfahren nach einem der vorherigen Ansprüche, wobei das Mobilgerät dafür eingerichtet ist, den geographischen Ort des Mobilgeräts mittels eines satellitengestützten Systems, insbesondere mittels eines GPS-Empfängers, zu ermitteln.

5. Verfahren nach einem der vorhergehenden Ansprüche, wobei das Mobilgerät ein Smartphone ist.

6. Verfahren nach einem der vorhergehenden Ansprüche, wobei die Schnittstelle des Mobilgeräts durch eine drahtlose Schnittstelle, insbesondere durch eine RFID-, insbesondere NFC-Schnittstelle, eine Bluetooth-Schnittstelle oder eine WLAN-Schnittstelle gebildet ist.

7. Leuchte nach einem der vorhergehenden Ansprüche, wobei der Schritt des Festlegens einer geographischen Fläche für einen beabsichtigten Installationsort der Leuchte umfasst, dass eine geographische Fläche für eine Vielzahl von Leuchten, deren Installation innerhalb der geographischen Fläche beabsichtigt ist, festgelegt wird.

8. Verfahren nach einem der vorhergehenden Ansprüche, wobei die geographische Fläche die geographische Fläche einer Liegenschaft, eines Stadtteils, oder die Fläche einer Kommune umfasst.

9. Verfahren nach einem der vorhergehenden Ansprüche, wobei die geographische Fläche eine zusammenhängende Fläche oder mehre getrennte Teilflächen umfasst.

10. Verfahren nach einem der vorhergehenden Ansprüche, wobei das Festlegen der geographischen Fläche in dem Serverprogramm durch das Festlegen eines Kreises um einen Mittelpunkt oder durch das Festlegen von Eckpunkten eines Polygons erfolgt.

11. Computerprogrammprodukt, welches Programmanweisungen umfasst, die, wenn sie auf einem Server und auf wenigstens einem Mobilgerät ausgeführt werden, dafür eingerichtet sind, das Verfahren nach einem der vorhergehenden Ansprüche aufzuführen.

12. System aus wenigstens einem Mobilgerät und einem Server, welches dazu eingerichtet ist, das Verfahren nach einem der vorhergehenden Ansprüche 1 bis 10 aufzuführen.
